# EUROPEAN PATENT SPECIFICATION

(11) **EP 0 862 514 B1**
(45) Date of publication and mention of the grant of the patent: **05.12.2001**
(21) Application number: 96931898.9
(22) Date of filing: 25.09.1996
(51) Int. Cl.: B32B 27/36, B32B 7/02, B65D 1/28

(54) **POLYESTER COMPOSITE SHEET**
POLYESTER-VERBUNDFOLIE
FEUILLE EN POLYESTER COMPOSITE

(30) Priority: 27.09.1995 GB 9519673
(43) Date of publication of application: 09.09.1998
(73) Proprietor: E.I. DUPONT DE NEMOURS AND COMPANY, Wilmington, Delaware 19898 (US)
(72) Inventor: DONNELLAN, John, Paul, Yarm Cleveland TS15 9XL (GB); BERRY, Michael, Richard, Guisborough Cleveland TS14 8PC (GB); RAMAGE, William, Yarm Cleveland TS15 9SY (GB)
(74) Representative: Jones, Alan John
(86) International application number: GB9602369
(87) International publication number: WO9711847

(56) References cited:
- EP-A- 0 441 694
- EP-A- 0 608 632
- GB-A- 2 150 074
- US-A- 4 048 736
- US-A- 4 520 053
- US-A- 4 642 959
- DATABASE WPI Week 8511 Derwent Publications Ltd., London, GB; AN 85-065465 XP002020210 & JP,A,60 021 244 (OJI YUKA GOSEISHI KK)

## Description

This invention relates to a composite sheet and, in particular, to a composite sheet for laminating to metal sheet.

Composite sheets comprising more than one layer of polymeric material are known. GB-2150074-A disclosed a decorative film comprising a polymeric base film layer containing highly light-absorbent pigment and on at least one surface of the base film layer a light-transmittable second layer of a polymeric material containing from 1 to 40% by weight of a solid particulate material. Optionally, a heat-sealable layer is applied to one or both surfaces of the base layer/light transmittable layer composite film.

Metal sheet laminated with polymeric film is known, and used, inter alia, for forming cans such as drawn and wall-ironed cans (known as DWI cans) and drawn and redrawn cans (known as DRD cans). Metal sheet for can making, such as aluminium or tinplate, is laminated with polymeric materials containing white pigments when a can exhibiting a white appearance is required. DWI cans are formed by cutting out a disc of metal sheet laminated with polymeric material, and forcing a punch into the metal sheet in a die to form a cup. Unfortunately the use of prior art white pigmented polymeric materials may result in excessive wear of the punch and/or die, and/or scoring of the resultant can surface.

US-4642959 describes a metal sheet material covered with a polyester seal layer, an ink-coloured graphic layer and an optically clear hard polyester overcoat for use in display panels. EP-0608632-A discloses a coated metal plate for use in draw-formed cans comprising a metal plate having an adhesive primer layer of a modified polyester resin, an inner polyester layer and an outer polyester layer.

We have now devised a composite sheet suitable for laminating to metal sheet which reduces or substantially overcomes at least one of the aforementioned problems.

Accordingly, the present invention provides a composite sheet comprising an opaque polyester core layer, a transparent polyester outer layer on a first surface of the core layer, and a heat-sealable layer on a second surface of the core layer, characterised in that said transparent polyester layer contains less than 0.5% by weight of filler material based on the weight of the polyester of the transparent layer.

The invention also provides a method of producing a composite sheet which comprises forming an opaque polyester core layer, providing a transparent polyester outer layer on a first surface of the core layer and providing a heat-sealable layer on a second surface of the core layer, characterised in that said transparent polyester layer contains less than 0.5% by weight of filler material based on the weight of the polyester of the transparent layer.

The invention further provides a laminated metal sheet comprising, in order, (i) a metal sheet, (ii) a heat-sealable layer, (iii) an opaque polyester core layer, and (iv) a transparent polyester outer layer.

The opaque core layer and/or transparent outer layer of a composite sheet according to the invention may be formed from any synthetic, film-forming, polyester material. A synthetic linear polyester is preferred, especially one which may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate or polyethylene naphthalate film is preferred. A polyethylene terephthalate film is particularly preferred, for the opaque core layer and/or transparent outer layer, especially such a film which has been biaxially oriented by sequential stretching in two mutually perpendicular directions, typically at a temperature in the range from 70 to 125°C, and preferably heat set, typically at a temperature in the range from 150 to 250°C, for example as described in British patent 838,708.

In one preferred embodiment of the invention the opaque core layer and the transparent outer layer of the composite sheet comprise the same polyester material, preferably polyethylene terephthalate or polyethylene naphthalate, and especially polyethylene terephthalate. It is also preferred that the opaque core layer and/or transparent outer layer comprise crystalline and/or semi-crystalline polyester.

In another preferred embodiment of the invention the opaque core layer comprises polyethylene terephthalate or polyethylene naphthalate, especially polyethylene terephthalate and the transparent outer layer comprises polybutylene terephthalate.

The melting point of the polyester material of the opaque core layer and/or transparent outer layer is preferably in the range from 240 to 265°C, more preferably 246 to 260°C, and particularly 253 to 258°C.

The opaque core layer and/or transparent outer layer of a composite sheet according to the invention may be uniaxially oriented, but are preferably biaxially oriented by drawing in two mutually perpendicular directions in the plane of the film to achieve a satisfactory combination of mechanical and physical properties. Formation of the film may be effected by any process known in the art for producing an oriented polyester film, for example a tubular or flat film process.

In a tubular process simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation.

In the preferred flat film process a film-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, ie the forward direction through the film stretching machine, and then in the transverse direction. Forward stretching of the extrudate is conveniently effected over a set of rotating rolls or between two pairs of nip rolls, transverse stretching then being effected in a stenter apparatus. Stretching is effected to an extent determined by the nature of the film-forming polyester, for example polyethylene terephthalate is usually stretched so that the dimension of the oriented film is from 2.5 to 4.5 times its original dimension in the, or each direction of stretching.

A stretched film may be, and preferably is, dimensionally stabilised by heat-setting under dimensional restraint at a temperature above the glass transition temperature of the film-forming polyester but below the melting temperature thereof, to induce crystallisation of the polyester.

The heat-sealable layer should be capable of forming a heat-seal bond to a metal sheet, by heating to soften the polymeric material of the heat-sealable layer and applying pressure without softening or melting the polyester material of the opaque core and/or transparent outer layer. The heat-sealable layer preferably exhibits a heat-seal strength, measured by sealing the layer to itself, in the range from 200 to 3000, more preferably 300 to 1500, and particularly 350 to 500 Nm⁻¹. The heat-seal strength can be measured by positioning together and heating two heat-sealable layers present on separate composite sheets, at 140°C for one second under a pressure of 275 kPa (40 psi), and measuring the force required under linear tension per unit width of seal to peel the layers of the film apart at a constant speed of 4.23 mm/second.

The heat-sealable layer suitably comprises a polyester resin, particularly a copolyester resin derived from one or more dibasic aromatic carboxylic acids, such as terephthalic acid. isophthalic acid and hexahydroterephthalic acid, and one or more glycols, such as ethylene glycol. diethylene glycol, triethylene glycol and neopentyl glycol. Typical copolyesters which provide satisfactory heat-sealable properties are those of ethylene terephthalate and ethylene isophthalate, especially in the molar ratios of from 50 to 90 mole % ethylene terephthalate and correspondingly from 50 to 10 mole % ethylene isophthalate. Preferred copolyesters comprise from 65 to 85 mole % ethylene terephthalate and from 35 to 15 mole % ethylene isophthalate, and especially a copolyester of about 82 mole % ethylene terephthalate and about 18 mole % ethylene isophthalate.

The melting point of the polymeric material of the heat-sealable layer is preferably in the range from 150 to 250°C, more preferably 180 to 230°C, particularly 200 to 220°C, and especially 210 to 215°C. In a preferred embodiment of the invention, the melting point of the polymeric material of the heat-sealable layer is preferably in the range from 20 to 60°C, more preferably 30 to 55°C, particularly 40 to 50°C, and especially 44 to 47°C less than the melting point of the polyester material of the opaque core layer and/or transparent outer layer.

Formation of a composite sheet according to the invention may be effected by conventional techniques, for example by laminating together a preformed opaque core layer, a preformed transparent outer layer and a preformed heat-sealable layer, or by casting the transparent outer layer and/or heat-sealable layer onto a preformed opaque core layer. Conveniently, however, formation of a composite sheet is effected by coextrusion, preferably of all three layers (outer/core/heat-sealable), either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a composite sheet.

The coextruded composite sheet is stretched to effect molecular orientation of the opaque core layer and/or transparent outer layer, and preferably heat-set. Generally, the conditions applied for stretching the composite sheet will induce partial crystallisation of the heat-sealable layer polymer and it is therefore preferred to heat set under dimensional restraint at a temperature selected to develop the desired morphology of the heat-sealable layer. Thus, by effecting heat-setting at a temperature below the crystalline melting temperature of the heat-sealable polymer and permitting or causing the composite sheet to cool, the heat-sealable polymer will remain essentially crystalline. However, by heat-setting at a temperature greater than the crystalline melting temperature of the heat-sealing polymer, the latter will be rendered essentially amorphous. Heat-setting of a composite sheet comprising a polyester core layer and/or a polyester outer layer and a copolyester heat-sealable layer is conveniently effected at a temperature in the range from 175 to 200°C to yield a substantially crystalline heat-sealable layer, or 200 to 250°C to yield an essentially amorphous heat-sealable layer. An essentially amorphous heat-sealable layer is preferred.

The polyester core layer is opaque, by which is meant substantially impermeable to visible light. The core layer preferably exhibits a Transmission Optical Density (TOD) (Sakura Densitometer; type PDA 65; transmission mode) in the range from 0.2 to 1.5, more preferably 0.25 to 1.25, particularly 0.35 to 0.75, and especially 0.45 to 0.65. The core layer is conveniently rendered opaque by incorporation into the synthetic polyester of an effective amount of an opacifying agent. Suitable opacifying agents include an incompatible resin filler, a particulate inorganic filler or a mixture of two or more such fillers.

By an "incompatible resin" is meant a resin which either does not melt, or which is substantially immiscible with the polyester, at the highest temperature encountered during extrusion and fabrication of the layer. The presence of an incompatible resin usually results in a voided core layer, by which is meant that the core layer comprises a cellular structure containing at least a proportion of discrete, closed cells. Suitable incompatible resins include polyamides and olefin polymers, particularly a homo- or co-polymer of a mono-alpha-olefin containing up to 6 carbon atoms in its molecule, for incorporation into polyester core layers. For incorporation into a polyethylene terephthalate core layer, suitable materials include a low or high density olefin homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

The amount of incompatible resin filler present in the core layer is preferably in the range from 2% to 30%, more preferably 3% to 20%, particularly 4% to 15%, and especially 5% to 10% by weight, based on the weight of the core layer polyester.

Particulate inorganic fillers suitable for generating an opaque core layer include conventional inorganic pigments and fillers, and particularly metal or metalloid oxides, such as alumina, silica and titania, and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the core layer polyester.

In a particularly preferred embodiment of the invention, the particulate inorganic filler comprises titanium dioxide.

Production of a core layer having satisfactory degrees of opacity and preferably whiteness requires that the inorganic filler, particularly of titanium dioxide, should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.2 to 5 µm, more preferably 0.4 to 1.5 µm, and particularly 0.8 to 1.2 µm.

The size distribution of the inorganic filler, particularly titanium dioxide, particles is also an important parameter, for example the presence of excessively large particles can result in the film exhibiting unsightly 'speckle', ie where the presence of individual filler particles in the film can be discerned with the naked eye. It is preferred that none of the inorganic filler particles incorporated into the opaque core layer should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm.

Particle size of the filler particles may be measured by electron microscope, coulter counter, sedimentation analysis and static or dynamic light scattering.
Techniques based on laser light diffraction are preferred. The median particle size may be determined by plotting a cumulative distribution curve representing the percentage of particle volume below chosen particle sizes and measuring the 50th percentile.

The amount of inorganic filler, particularly of titanium dioxide, incorporated into the opaque core layer polyester desirably should be not less than 1% nor exceed 30% by weight, based on the weight of the polyester. Particularly satisfactory levels of opacity are achieved when the concentration of filler is in the range from 5% to 20%, particularly 10% to 15%, and especially 12% to 13% by weight, based on the weight of the core layer polyester.

The preferred titanium dioxide particles may be of anatase or rutile crystal form. The titanium dioxide particles preferably comprise a major portion of rutile, more preferably at least 60% by weight, particularly at least 80% by weight, and especially approximately 100% by weight of rutile. The particles can be prepared by standard procedures, such as using the chloride process or sulphate process.

In one embodiment of the invention the titanium dioxide particles are coated preferably with inorganic oxides such as aluminium, silicon, zinc, magnesium or mixtures thereof. It is preferred that the coating additionally comprises an organic compound, such as alkanols and fatty acids, preferably having in the range from 8 to 30, more preferably 12 to 24 carbon atoms. Polydiorganosiloxanes or polyorganohydrogensiloxanes, such as polydimethylsiloxane or polymethylhydrogensiloxane are particularly preferred.

The coating is applied to the titanium dioxide particles in aqueous suspension. The inorganic oxides are precipitated in aqueous suspension from water-soluble compounds such as sodium aluminate, aluminium sulphate, aluminium hydroxide, aluminium nitrate, silicic acid or sodium silicate.

The coating layer on the titanium dioxide particles is preferably 1% to 12%, more preferably 2% to 6% of inorganic oxides and 0.5% to 3%, and particularly 0.7% to 1.5% of organic compound, by weight based upon the weight of titanium dioxide.

If both an incompatible resin filler, preferably a polyolefin, and a particulate inorganic filler, preferably titanium dioxide, are present in the opaque core layer it is preferred that the concentration of the particulate inorganic filler is in the range from 1% to 30%, more preferably 1% to 15%, particularly 2% to 8%, and especially 3% to 7% by weight, based on the weight of the core layer polyester.

The components of the core layer compositions may be mixed together in conventional manner. For example, by mixing with the monomeric reactants from which the polyester is derived. or the components may be mixed with the polyester by tumble or dry blending or by compounding in an extruder, followed by cooling and, usually, comminution into granules or chips. Masterbatch technology may be employed.

The opaque core layer of a composite sheet according to the invention preferably has a Deformation Index (DI) of greater than or equal to 2.5%, and more preferably exhibits a DI of not greater than 50%. The core layer preferably exhibits a Dl in the range from 3.5% to 20%, more preferably 4.0% to 10%. and particularly 4.5% to 7%. The Dl is the deformation, expressed as a percentage of the original thickness of the layer, observed when a film of the layer is subjected, at a temperature of 200°C, to a pressure of 2 megaPascals applied normal to the plane of the sheet by the herein described test procedure.

The polyester outer layer is transparent by which is meant substantially permeable to visible light. The outer layer preferably exhibits a Transmission Optical Density (TOD) (Sakura Densitometer; type PDA 65; transmission mode) in the range from 0.005 to 0.2, more preferably 0.02 to 0.15, and particularly 0.03 to 0.1. The transparent outer layer is preferably essentially unfilled, although relatively small amounts of filler may be present to improve handleability of the film. The transparent layer comprises less than 0.5%, and particularly less than 0.25% by weight of filler material, based on the weight of the transparent layer polyester. Any filler present in the transparent layer is preferably of the non-voiding type. An inorganic filler is preferred, more preferably china clay, for use in the transparent layer, such as a polyethylene terephthalate or polybutylene terephthalate film. The filler, suitably china clay, preferably has an average particle size in the range from 0.1 to 10 µm, more preferably 0.5 to 1.5 µm.

The transparent outer layer of a composite sheet according to the invention preferably exhibits a Deformation Index (Dl) less than that of the core layer. The Dl of the transparent layer is preferably less than or equal to 4.0%, more preferably less than or equal to 3.5%, and particularly less than or equal to 2.5%.

Other additives, generally in relatively small quantities, may optionally be incorporated into the opaque core, transparent outer and/or heat-sealable layer(s). For example, optical brighteners in amounts up to 1500 parts per million to promote whiteness, and dyestuffs in amounts of up to 10 parts per million to modify colour, the specified concentrations being by weight, based on the weight of the layer polymer(s).

The thickness of the composite sheet according to the invention is preferably in the range from 5 to 400 µm, more preferably 8 to 100 µm, and particularly 15 to 30 µm. In general, the thickness of the opaque core layer will not exceed 300 µm, and will preferably be in the range from 5 to 80 µm, and more preferably 10 to 25 µm. The thickness of the transparent outer layer is preferably in the range from 0.5 to 100 µm, more preferably 1 to 50 µm, particularly 1 to 15 µm, and especially 1 to 5 µm. The thickness of the heat-sealable layer is preferably in the range from 1 to 100 µm, more preferably 2 to 50 µm, particularly 2 to 15 µm, and especially 3 to 8 µm.

In a preferred embodiment of the invention the thickness of the opaque core layer is greater than 70%, more preferably greater than 80%, particularly greater than 90%, and especially greater than 95% of the combined thickness of the opaque core layer and transparent outer layer.

The metal sheet to which the composite film according to the invention can be laminated to, is suitably aluminium or steel, or alloys thereof. An aluminium sheet is preferably of 0.02 to 0.4 mm thickness, and a steel sheet is preferably of 0.05 to 0.4 mm thickness. The steel may be nickel, zinc or tin plate, black plate, phosphated black plate or electrically chromium coated with both chromium metal and chromium oxide. A suitable method of forming a laminated metal sheet and drawn and wall-ironed (DWI) cans is described in EP-A-0312304, the teaching of which is incorporated herein by reference. In a preferred process, the metal sheet is preheated to a temperature in the range from 140 to 350°C, the composite sheet is positioned on at least one side of the metal sheet (heat-sealable layer in contact with the metal sheet), and the assembly is passed through nip rolls. The resultant laminate is reheated to a temperature in the range from 260 to 300°C and rapidly quenched in a water bath.

The invention is illustrated by reference to the accompanying drawings in which:
Figure 1 is a schematic sectional elevation, not to scale, of a composite sheet having an opaque core layer, a transparent outer layer and a heat-sealable layer.
Figure 2 is a similar schematic elevation of a composite sheet with a metal sheet on the remote surface of the heat-sealable layer.

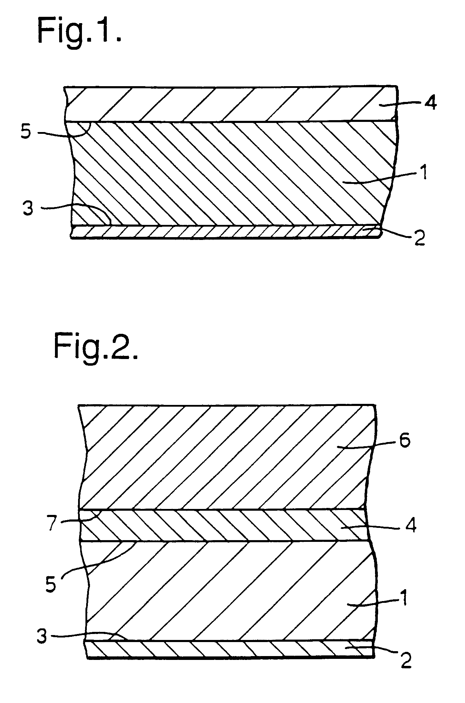

Referring to Figure 1 of the drawings, the composite sheet comprises an opaque core layer (1), having a transparent outer layer (2) bonded to the first surface (3) of the core layer (1), and a heat-sealable layer (4) bonded to the second surface (5) of the core layer (1).

The film of Figure 2 further comprises a metal sheet (6) bonded to the remote surface (7) of the heat-sealable layer (4).

The invention is further illustrated by reference to the following examples.

The following test procedure was used.

### Deformation Index

The deformation index was measured using a thermomechanical analyser, Perkin Elmer, type TMA7, with a test probe having a surface area of 0.785 mm².

A sample of the polyester film was introduced in a sample holder into the TMA7 furnace and allowed to equilibrate at the selected temperature of 200°C. The probe was loaded to apply a pressure of 0.125 megaPascals normal to the planar surface of the hot film sample and the deformation was observed to be zero. The load on the probe was then increased whereby a pressure of 2 megaPascals is applied to the sample. The observed displacement of the probe under the increased load was recorded and expressed as a percentage of the thickness of the undeformed hot sample (under 0.125 megaPascals pressure). The aforementioned percentage is the Deformation Index (Dl) of the tested film material. The procedure was repeated four times with different samples of the same film, and a mean value of the five measurements calculated.

### Example 1

Separate streams of a core layer polymer of polyethylene terephthalate comprising 12.5% by weight of the polymer of titanium dioxide of average particle size 1 µm, an outer layer polymer of polyethylene terephthalate comprising 0.15% by weight of the polymer of china clay of average particle size 0.8 µm, and a heat-sealable polymer comprising a copolyester of 82 mole % ethylene terephthalate and 18 mole % ethylene isophthalate were supplied from separate extruders to a single channel coextrusion assembly. The polymer layers were extruded through a film-forming die onto a water cooled rotating, quenching drum to yield an amorphous cast composite extrudate. The cast extrudate was heated to a temperature of about 80°C and then stretched longitudinally at a forward draw ratio of 3.2:1. The composite sheet was passed into a stenter oven, where the sheet was dried and stretched in the sideways direction to approximately 3.4 times its original dimensions. The biaxially stretched composite sheet was heat set at a temperature of about 225°C. Final film thickness of the composite sheet was 25 µm. The opaque core layer was 21 µm thick, the transparent outer layer was 1 µm thick and the heat-sealable layer was 3 µm thick.

The composite sheet exhibited a Transmission Optical Density (TOD) of 0.53 and a Deformation Index (DI) of 5.1%.

A metal sheet was laminated to the composite sheet by preheating a metal sheet to a temperature in the range from 200 to 230°C, positioning the composite sheet on one side of the metal sheet (heat-sealable layer in contact with the metal sheet), and passing the composite sheet/metal sheet assembly through nip rolls. The resultant laminate was reheated to a temperature in the range from 260 to 300°C and rapidly quenched in a water bath. DWI cans were formed from the laminate. No significant wear of the punch and die used in the can making process was observed. In addition, no scoring of the resultant can surface was observed.

### Example 2

This is a comparative example not according to the invention. The procedure of Example 1 was repeated except that the transparent outer layer was omitted from the composite sheet structure. Final film thickness of the composite sheet was 25 µm. The core layer was 21 µm thick and the heat-sealable layer was 4 µm thick.

The composite sheet was laminated to a metal sheet, and the resulting laminate was used to form DWI cans. Wear of the punch and die used in the can making process, and scoring of the resultant can surface was observed.

## Claims

1. A composite sheet comprising an opaque polyester core layer, a transparent polyester outer layer on a first surface of the core layer, and a heat-sealable layer on a second surface of the core layer, **characterised in that** said transparent polyester layer contains less than 0.5 % by weight of filler material based on the weight of the polyester of the transparent layer.

2. A composite sheet according to claim 1 wherein the thickness of the composite sheet is in the range from 8 to 100 µm.

3. A composite sheet according to either one of claims 1 and 2 wherein the thickness of the opaque core layer is greater than 70% of the combined thickness of the opaque core layer and transparent outer layer.

4. A composite sheet according to any one of the preceding claims wherein the thickness of the transparent outer layer is in the range from 1 to 15 µm.

5. A composite sheet according to any one of the preceding claims wherein the core layer has a Transmission Optical Density in the range from 0.2 to 1.5.

6. A composite sheet according to any one of the preceding claims wherein the core layer has a deformation index of greater than or equal to 2.5%, measured at a temperature of 200°C and under a pressure of 2 megaPascals.

7. A composite sheet according to any one of the preceding claims wherein the core layer comprises an incompatible resin filler and/or a particulate inorganic filler.

8. A composite sheet according to claim 7 wherein the particulate inorganic filler comprises titanium dioxide.

9. A method of producing a composite sheet which comprises forming an opaque polyester core layer, providing a transparent polyester outer layer on a first surface of the core layer, and providing a heat-sealable layer on a second surface of the core layer, **characterised in that** said transparent polyester layer contains less than 0.5 % by weight of filler material based on the weight of the polyester of the transparent layer.

10. A laminated metal sheet comprising, in order, (i) a metal sheet, (ii) a heat-sealable layer, (iii) an opaque polyester core layer, and (iv) a transparent polyester outer layer.

## Patentansprüche

1. Verbundlage, umfassend eine opake Polyesterkernschicht, eine transparente Polyesteraußenschicht auf einer ersten Oberfläche der Kernschicht und eine hitzeversiegelbare Schicht auf einer zweiten Oberfläche der Kernschicht, **dadurch gekennzeichnet, daß** die transparente Polyesterschicht weniger als 0,5 Gew.% Füllstoffmaterial, basierend auf dem Gewicht des Polyesters der transparenten Schicht, enthält.

2. Verbundlage nach Anspruch 1, wobei die Dicke der Verbundlage in dem Bereich von 8 bis 100 µm liegt.

3. Verbundlage nach einem der Ansprüche 1 oder 2, wobei die Dicke der opaken Kernschicht größer als 70% der kombinierten Dicke der opaken Kernschicht und transparenten Außenschicht ist.

4. Verbundlage nach einem der vorhergehenden Ansprüche, wobei die Dicke der transparenten Außenschicht in dem Bereich von 1 bis 15 µm ist.

5. Verbundlage nach einem der vorhergehenden Ansprüche, wobei die Kernschicht eine Optische Transmissionsdichte in dem Bereich von 0,2 bis 1,5 hat.

6. Verbundlage nach einem der vorhergehenden Ansprüche, wobei die Kernschicht einen Deformationsindex größer als oder gleich 2,5%, gemessen bei einer Temperatur von 200°C und unter einem Druck von 2 Megapascal, hat.

7. Verbundlage nach einem der vorhergehenden Ansprüche, wobei die Kernschicht einen inkompatiblen Harzfüllstoff und/oder einen aus Teilchen bestehenden anorganischen Füllstoff umfaßt.

8. Verbundlage nach Anspruch 7, wobei der aus Teilchen bestehende anorganische Füllstoff Titandioxid umfaßt.

9. Verfahren zum Herstellen einer Verbundlage, das umfaßt Bilden einer opaken Polyesterkernschicht, zur Verfügung stellen einer transparenten Polyesteraußenschicht auf einer ersten Oberfläche der Kernschicht und zur Verfügung stellen einer hitzeversiegelbaren Schicht auf einer zweiten Oberfläche der Kernschicht, **dadurch gekennzeichnet, daß** die transparente Polyesterschicht weniger als 0,5 Gew.% Füllstoffmaterial, basierend auf dem Gewicht des Polyesters der transparenten Schicht, enthält.

10. Laminierte Metalllage, umfassend in Reihenfolge (i) eine Metalllage, (ii) eine hitzeversiegelbare Schicht, (iii) eine opake Polyesterkernschicht und (iv) eine transparente Polyesteraußenschicht.

## Revendications

1. Feuille composite comprenant une couche centrale de polyester opaque, une couche extérieure de polyester transparente sur une première surface de la couche centrale et une couche thermoscellable sur la deuxième surface de la couche centrale, **caractérisée en ce que** ladite couche de polyester transparente contient moins de 0,5% en poids de matériau de charge sur la base du poids du polyester de la couche transparente.

2. Feuille composite suivant la revendication 1, dans laquelle l'épaisseur de la feuille composite se trouve dans l'intervalle de 8 à 100 µm.

3. Feuille composite suivant l'une ou l'autre des revendications 1 et 2, dans laquelle l'épaisseur de la couche centrale opaque est supérieure à 70% de l'épaisseur combinée de la couche centrale opaque et de la couche extérieure transparente.

4. Feuille composite suivant l'une quelconque des revendications précédentes, dans laquelle l'épaisseur de la couche extérieure transparente se trouve dans l'intervalle de 1 à 15 µm.

5. Feuille composite suivant l'une quelconque des revendications précédentes, dans laquelle la couche centrale présente une densité optique de transmission dans l'intervalle de 0,2 à 1,5.

6. Feuille composite suivant l'une quelconque des revendications précédentes, dans laquelle la couche centrale possède un indice de déformation supérieur ou égal à 2,5%, mesuré à une température de 200°C et sous une pression de 2 mégaPascals.

7. Feuille composite suivant l'une quelconque des revendications précédentes, dans laquelle la couche centrale comprend une charge de résine incompatible et/ou une charge inorganique particulaire.

8. Feuille composite suivant la revendication 7, dans laquelle la charge inorganique particulaire comprend du dioxyde de titane.

9. Procédé pour la production d'une feuille composite qui comprend la formation d'une couche centrale de polyester opaque, la fourniture d'une couche extérieure de polyester transparente sur une première surface de la couche centrale, et la fourniture d'une couche thermoscellable sur la deuxième surface de la couche centrale, **caractérisé en ce que** ladite couche de polyester transparente contient moins de 0,5% en poids de matériau de charge sur la base du poids du polyester de la couche transparente.

10. Feuille métallique laminée comprenant, dans l'ordre, (i) une feuille de métal, (ii) une couche thermoscellable, (iii) une couche centrale de polyester opaque et (iv) une couche extérieure de polyester transparente.
